# EUROPEAN PATENT SPECIFICATION

(11) **EP 0 918 619 B1**
(45) Date of publication and mention of the grant of the patent: **02.01.2002**
(21) Application number: 97927306.7
(22) Date of filing: 25.06.1997
(51) Int. Cl.: B29C 65/34, F16L 47/02

(54) **ELECTROFUSION FITTING**
ELEKTROSCHWEISSKUPPLUNGSVORRICHTUNG
RACCORD POUR ELECTROFUSION

(30) Priority: 25.06.1996 DE 19625439; 20.11.1996 GB 9624073
(43) Date of publication of application: 02.06.1999
(73) Proprietor: Uponor Innovation AB, 513 81 Fristad (SE)
(72) Inventor: DICKINSON, Alan, John, Nottingham NG17 8LL (GB); JARVENKYLA, Jyri, Jaakko, FIN-15870 Hollola (FI); RIESSELMANN, Franz-Josef, D-49393 Lohne (DE)
(74) Representative: Lunt, Mark George Francis
(86) International application number: GB9701703
(87) International publication number: WO9749540

(56) References cited:
- EP-A- 0 253 966
- EP-A- 0 378 406
- EP-A- 0 531 750
- EP-A- 0 751 329
- WO-A-91/04845
- WO-A-92/18322
- BE-A- 556 713
- DE-A- 3 422 074
- DE-A- 4 123 383
- DE-A- 4 307 704
- DE-A- 4 444 097
- DE-A- 4 444 914
- DE-A- 4 447 237
- DE-U- 9 107 713
- DE-U- 9 208 024
- FR-A- 2 606 487
- FR-A- 2 743 525
- GB-A- 2 037 923
- GB-A- 2 273 679
- US-A- 4 045 272
- PATENT ABSTRACTS OF JAPAN vol. 017, no. 490 (M-1474), 6 September 1993 & JP 05 118486 A (SEKISUI CHEM CO LTD), 14 May 1993,
- PATENT ABSTRACTS OF JAPAN vol. 014, no. 231 (M-0974), 16 May 1990 & JP 02 060730 A (HITACHI CABLE LTD), 1 March 1990,
- PATENT ABSTRACTS OF JAPAN vol. 014, no. 206 (M-0967), 26 April 1990 & JP 02 042295 A (SEKISUI CHEM CO LTD;OTHERS: 01), 13 February 1990, cited in the application

## Description

This invention relates to electrofusion fittings, and more particularly to an electrofusion fitting suitable for use with a wide range of plastics pipes.

Plastics pipes are becoming increasingly used for the conveying of fluids, in particular gases and liquids, through pipe-lines. Examples of commonly used plastics materials for such pipes include polyethylene and polyvinylchloride. The properties of these materials can be improved somewhat by, for example, orientation and/or cross-linking, but it is technically and practically difficult to raise the pressure resistance of the pipe higher than around 15 to 20 bars. Thus, although such thermoplastic materials are suitable for low pressure, ambient temperature applications, where higher pressures and temperatures are used, it has been necessary to develop, for example, multi-layer composite pipes wherein the plastics materials are reinforced, for example, with a metal or glass fibre layer, or other layer of high axial strength, or wherein a layer of foamed plastics material is provided for thermal insulation purposes.

The coupling of plastics pipes using electrofusion fittings is well known, and, for example, typical electrofusion fittings are described in DE 20 15 682 A1, DE 32 26 575 Cl, DE 33 07 161 A1, DE 94 01 401 U1, EP 0 076 460 B1 and EP 0 115 623 B1. The entire disclosures of each of the abovementioned prior patents are incorporated herein by reference for all purposes.

Problems have been encountered in attempts to use conventional in-line electrofusion fittings for the coupling of multi-layer composite pipes. For example, because the conventional electrofusion fitting only fuses to the outer surface of a plastics pipe, the cut end face of the pipe is left unprotected. Whilst this is not normally a problem with simple homogeneous plastics pipes, with multi-layer composite pipes the reinforcing and/or thermal insulation layers can become exposed to the fluid in the pipe at the pipe end, leading to delamination, corrosion of metal layers and/or destruction of the foam insulation. Further, if multi-layer composite pipes are only linked together at the outside with a weld joint, only this layer will take over the bearing function. Since the outer layer normally is relatively thin and the adhesion to the other layers is limited, such a connection cannot withstand higher strains over a longer period.

For example, certain multi-layer composite pipes which are designed to have great axial strength performance, due to the presence of reinforcing layers or cross-linked and/or oriented thermoplastic layers of high axial strength, cannot be joined by electrofusion methods to give a joint of comparable axial strength performance. This is because the materials used for the outer layers of these pipes are often of lesser quality in this respect, as only tear strength, crack propagation properties and UV stabilisation are normally taken into consideration in the choice of materials. The outer layer of such pipes is also often very thin, which also contributes to a lower axial strength. A special problem is also created by multi-layer pipes in which the layer underlying the outer layer of the pipe is foam, for example, as described in WO-A-9701429, the entire disclosure of which is incorporated herein by reference for all purposes. This structure has very bad tear strength properties.

Attempts to deal with these problems have been largely unsuccessful. In DE 44 44 914 there is shown an electrofusion coupler for a multi-layer composite pipe, wherein an annular end protector is provided for the adjoining pipe ends. This, however, does not seal against the pipe end and there is still a danger of fluid ingress giving rise to the problems outlined above. In DE 44 47 237 there is described an electrofusion coupler for high density polyethylene pipes wherein the pipe ends are inserted into annular spaces provided with electrofusion coils on their inner and outer surfaces. However, with such a coupler, it is difficult to prevent fused material from extruding out of the annular space, leaving a void, and the high temperatures generated could easily lead to collapse of the foam insulation of some types of multi-layer composite pipe, for example, of the types described in Finnish Patent Application No. 955960.

In Japanese Patent Application No. 63191709 (publication number 02042295A) there is described a joint body for a composite pipe which comprises outer and inner cylinders defining a gap for insertion of the pipe. The body has a fastening nut which bears on a fusible ring located at the end of the body. A heat generating substance in the outer and inner cylinders is energised to fuse the outer and inner cylinders and the composite pipe together, and to fuse the fusible ring.

According to the present invention there is provided an electrofusion fitting for a plastics pipe, which comprises a hollow, tubular enclosure comprising a body to which an end of the plastics pipe can be connected, the body comprising at least one circumferential inner wall and at least one circumferential outer wall concentric therewith, the inner and outer walls forming an annular space for receiving the end of the plastics pipe, and comprising thermoplastics material at least in their region adjacent to the annular space, at least one electrical heating element for heating the thermoplastic material of the inner and outer walls being located adjacent to, or embedded in , each of the said at least one inner wall and said at least one outer wall in their regions adjacent the annular space, characterised in that said heating elements of the inner and outer walls of the body of the fitting are offset with respect to each other in an axial direction.

The electrofusion fitting is preferably provided with a reinforcement in the region of its at least one internal wall.

The electrical heating elements preferably each comprise serpentine electrical heating conductors, which can move to accommodate fused plastics flow thereby substantially preventing the formation of voids during fusion.

Preferably, means are provided for gripping and/or for applying lateral pressure on the end of the plastics pipe received in the annular space during fusion.

In a further aspect, the invention provides a method for connecting a plastics pipe using an electrofusion fitting, wherein there is used an electrofusion fitting comprising a hollow, tubular enclosure comprising a body to which an end of the plastics pipe can be connected, the body comprising at least one circumferential inner wall and at least one circumferential outer wall concentric therewith, the inner and outer walls forming an annular space for receiving the end of the plastics pipe and comprising thermoplastic material in their regions adjacent the annular space, at least one electrical heating element for heating the thermoplastic material of the inner and outer walls being located adjacent to, or embedded in, each of said at least one inner wall and said at least one outer wall in their regions adjacent the annular space, wherein the body of the electrofusion fitting is provided with an annular spreading member which projects into the annular space from a closed end of the said space, which method comprises:
pushing the plastics pipe into the annular space of the hollow, tubular enclosure so that the annular spreading member penetrates into the end wall of the plastics pipe exerting a spreading action thereon; and
energising the heating elements to fuse the thermoplastic material and form a fusion bond to the plastics pipe.

Also included in the invention is a plastics pipe joint formed using an electrical fitting or a method according to the invention.

In the electrofusion fitting according to the invention, the hollow, tubular enclosure comprises a body which preferably comprises a cylindrical circumferential inner wall as well as a circumferential outer wall concentric there-with. The body of the fitting according to the invention is provided with at least one pair of such walls. An electrofusion fitting according to the invention, being configured as a connector, for example, comprises a two pairs of such walls. Between a respective inner wall and a respective outer wall, there is an annular space being open in an axial direction and functioning to receiving the end of the plastic pipe to be connected. In each inner wall as well as in each outer wall, at least one electrical heating element is embedded which, when carrying current, heats the material of the walls in their regions adjacent the annular space until fusion. Thus, it is achieved that the end of the plastic pipe to be connected, which has been introduced into the annular space, is heated until fusion on both its inner side and its outer side, a welding of the plastic pipe with the connecting body of the electrofusion fitting being effected both radially outward and radially inward after solidification.

In the invention, the body of the electrofusion fitting may entirely consist of a thermoplastic material. It is also possible, however, that only those regions of the body which are near the annular space are made of thermoplastic material. In particular, that thermoplastic material of the body into which the electrical heating elements are embedded has a lower melting pint than the remaining regions of the body.

Preferably, the inner and outer walls substantially have the same axial length. Thus, walls of the body rest against both the inside and the outside of the plastic pipe over substantially identical axial sections.

Suitably, the annular space of the body is formed by an insert member of thermoplastic material which is interposed between the inner and outer walls and on or in which the electrical heating elements are located. The electrical heating elements themselves may have the material of the insert member injection-moulded around, or they are mounted to or in the insert member in another manner. The same considerations apply correspondingly for the case that the body entirely consists of plastics material into which the electrical heating elements are embedded. Here as well, the heating elements may have the plastics material for the body injection-moulded around them.

The hollow, tubular enclosure can comprise a plastics or a metal body, or may be of a composite construction, with plastics and reinforcing layers. The reinforcement can, for example, comprise a sleeve or grid formed from metallic materials, or it can comprise reinforcing fibres. In manufacturing a hollow, tubular enclosure reinforced with fibres, the reinforcing fibres can be wound on a preform and later provided with a plastics outer skin. Alternatively, the fibre reinforcement can comprise a three dimensional preform, which maintains its shape, and comprises fused plastics coated fibres. The preform can be set into a mould cavity and the spaces or interstices in the preform filled with a plastics matrix material by, for example, injection moulding, to give an oriented hollow, tubular enclosure, as described in WO-A-9710941.

The tubular enclosure can comprise an integral body, or can comprise two or more hollow body members which can be separately installed and connected. The hollow body members can be threaded, in order that they can be screwed together, or can have co-operating annular projections or depressions enabling them to be a push-fit or snap-fit together. In a preferred embodiment according to the invention, the enclosure comprises a first hollow body member comprising the at least one circumferential inner wall of the body, and a second hollow body member comprising the at least one circumferential outer wall of the body. On assembly, the first (inner) hollow member can be placed inside the second (outer) hollow member and an appropriate connection made in order to link the two hollow members together and create the annular space for receiving the end of the plastics pipe. Alternatively, the hollow members can be sequentially installed on the pipe, usually with the inner hollow member installed first.

The dimensions of the enclosure will, of course, be largely determined by the outer diameter and wall thickness of the pipe or pipes to be connected, and the length of the fusion joint required, but preferably the annular space is arranged to give a tight fit and conform closely to the dimensions of the pipe end, and, as will be more particularly described hereinafter, it can in some embodiments even be slightly smaller in width than the thickness of the pipe wall.

Although it is not usually necessary to do so, it is possible to use the electrofusion fitting of the invention with pipes whose ends have been expanded in diameter, for example, as shown in EP-A-736719.

The electrofusion fitting can comprise a connector whereby a pipe is fused or "welded" to another component by the action of an electrical heating element which may be a resistance or an induction heating element. The electrofusion fitting can, for example, comprise electrical conductor elements, for example metal coils, rings, metal mesh, or other suitably shaped electrically conductive members, which are located adjacent to, or embedded in, a layer of fusible thermoplastics polymeric material in the regions of the inner and outer walls forming the annular space. The electrical conductor elements may be energised, for example, by passage of an electric current therethrough, or by inductive heating, in order to melt the adjacent thermoplastic material and form a fusion bond with the inner and outer surface of the plastics pipe.

The electrical heating elements of the electrofusion fitting can comprise helical coils, but preferably the electrical heating elements are formed from serpentine coils of electrical resistance wire as previously mentioned, or from some similar construction which permits the heating elements readily to change diameter in order to take up any gaps between the walls of the annular space and the outer surfaces of the plastics pipe, to minimise any void formation. Where the electrical heating elements comprise serpentine coils, the configuration is such that the heating conductors comprise longitudinal sections parallel to each other and interconnected by connecting sections, the longitudinal sections being parallel to the axial extension of the annular space. Alternatively, the heating elements may also be configured as helical heating conductors. Finally, it is also possible to configure the heating elements as conducting cages comprising several heating wires extending in axial extension of the connecting body and being provided with connecting conductors on their end faces.

In certain embodiments it is possible to use both electrical resistance heating elements and inductive heating elements. In such cases, for example, the heating element located adjacent to, or embedded in, the outer wall can be an electrical resistance heating element, and the heating element adjacent to, or embedded in, the inner wall can be an inductive heating element, or vice versa. Where the inductive heating element is embedded in the inner wall this can also provide a reinforcing layer, as more particularly described hereinafter. Where both electrical resistance heating elements and inductive heating elements are used, these do not necessarily need to be energised simultaneously. The term "inductive heating element" includes the Curie Point heating elements described in EP-A-0480 053 the entire disclosure of which is incorporated herein by reference for all purposes.

The fusible thermoplastic polymeric material of the electrofusion fitting can comprise, for example, a polyolefin, for example, polyethylene, polypropylene, polybutylene and higher olefinic polymers; co-polymers of ethylene, propylene and butylene with each other and with other olefinically unsaturated monomers; vinyl halide polymers, for example, polyvinylchloride; olefinically unsaturated aromatic polymers such as polystyrene and styrene co-polymers; and polymers and co-polymers of vinyl monomers such as ethylene vinyl acetate co-polymers, polycarbonates, and like materials. Polyethylene is the preferred fusible polymeric material, particularly where multi-layer composite pipes having outer and inner polyethylene surfaces are to be joined. If desired, the fusible thermoplastic polymeric material can comprises a modified polyolefin material, for example, an anhydride modified polyethylene, or the material can comprises a cross-linking agent which reacts during or after the fusion bonding step to cross-link agent which reacts during or after the fusion bonding step to cross-link the polymeric material and possibly the adjacent surface of the pipe. Modified polyolefins are particularly useful in joining polyolefin surfaces of dissimilar composition. Suitable modified polyolefin materials include, for example, alpha olefin polymers and co-polymers comprising up to 10% by weight of an olefinically unsaturated carboxylic acid or an anhydride thereof, such as, for example, acrylic acid, maleic acid, itaconic acid, and succinic acid, or their anhydrides, as copolymer or graft copolymer components.

If desired, the fusible thermoplastic polymeric material can comprise one or more fillers, and, for example, it can comprise fillers which react and can reach high temperature when exposed to infra-red radiation or electromagnetic radiation, for example, stainless steel fibres, as described in PCT/EP96/02801. The use of such fillers to assist, or instead of, the fusion means described above is included as a further aspect within the invention.

According to the present invention, the heating elements of the inner and outer walls of the body of the fitting are offset in an axial direction, in order to ensure that there is adequate material available to flow and fill the fusion areas around the heating elements. Where the heating elements of the electrofusion fitting of the invention are axially off-set, they are preferably arranged such that the inner heating element is disposed adjacent to the closed end of the annular space, and the outer heating element is disposed at a distance from the closed and such that it does not axially overlap the inner heating element. This provides an opportunity for the end of the plastics pipe adjacent the inner heating element to "buckle" slightly on electrofusion, such that the fused material to support the inner fusion can sink from the outside of the pipe near the end of the pipe, whilst the fused material to support the outer fusion can be drawn in from the bore of the pipe to the region of the outer heating element.

In certain embodiments, the body of the electrofusion member can be so shaped that the walls bounding the annular space are slightly conical, and of a diameter increasing with distance away from the open end thereof. This feature may be particularly useful in combination with the offset heating elements described earlier, creating a profile to counteract the "buckling" of the end of the plastics pipe, and limiting any diameter reduction of the pipe.

In another preferred aspect of the invention, at least during the electrofusion process, a gripping force and/or lateral pressure is applied to the end of the plastics pipe. Without wishing to be bound by any particular theory, it is believed that the action of gripping the end of the plastics pipe prevents any internal pressure generated by expansion of fused material within the annular space from extruding molten thermoplastic material from the end of the electrofusion fitting, thereby leaving voids and adversely affecting the quality of the joint. In a similar fashion, lateral pressure applied to the pipe surfaces at the end of the pipe serves to keep the pipe surfaces in close contact with the inner and outer walls forming the annular space in the fitting, thereby reducing the risk of void formation.

Where the electrofusion fitting is provided with gripping means, this can, for example, comprise a series of two or more teeth which are radially disposed around the annular space and protrude slightly into the annular space so that, in use, they are capable of contacting and gripping the outer and/or inner surfaces of the plastics pipe. The teeth of the gripping means can, if desired, be sharp enough to penetrate an outer surface layer of the plastics pipe, and, where a multi-layer composite pipe is to be connected, the teeth can penetrate to contact the reinforcing layer of the composite pipe, in order to improve the connection thereto.

Other forms of gripping means can be envisaged, for example, the teeth could be replaced by roughened surfaces on the walls of the annular space, or the gripping means could comprise a resilient split ring, or similar component. The teeth or other gripping means are preferably infusible at the fusion temperature of the fusible thermoplastic polymeric material.

In those embodiments of the invention in which lateral pressure is applied to the pipe surfaces at the end of the plastics pipe during fusion, this can be accomplished in a variety of ways. In a first method according to the invention, the width of the annular space is slightly less than the thickness of the plastics pipe wall, and the plastics pipe wall is compressed, or the annular space is expanded, in order to permit the plastics pipe end to be received in the annular space.

The width of the annular space can be, for example, from 100% to 95% of the thickness of the plastics pipe wall. When the compression, or expansion, forces are removed, the plastics pipe will be a tight interference fit in the annular space and the circumferential inner and outer walls of the body of the fitting will apply lateral pressure on the plastics pipe.

In a further embodiment, the body of the electrofusion fitting comprises an inner and an outer member which are assembled to form the annular space for receiving the end of the plastics pipe. The relative dimensions of the inner and outer body members can be so arranged that on assembly of the body of the electrofusion fitting around the end of the plastics pipe the circumferential inner and outer walls of the annular space exert lateral pressure on an end region of the plastics pipe. This embodiment has the advantage that pipes of different thickness, but the same outside diameter, or pipes of different thickness but the same inner diameter, can be connected by replacing only one of the inner or outer body members, as appropriate. This can reduce inventory and save costs.

In a further embodiment, the body of the electrofusion fitting can be provided with an annular spreading member which projects into the annular space from the closed end thereof, such that, when the plastics pipe is pushed into the annular space, the annular spreading member penetrates into the end wall of the plastics pipe exerting a spreading action thereon. The spreading member thereby forces the inner and outer surfaces of the plastics pipe into contact with the inner and outer walls surrounding the annular space of the fitting, which in turn apply lateral pressure on the end of; the plastics pipe.

In a still further embodiment, it is possible for the material of the hollow, tubular enclosure comprising the circumferential outer wall of the annular space to be formed from a heat recoverable material, for example, an expanded, cross-linked thermoplastic material, such that, on heating, the expanded circumferential outer wall recovers to a smaller diameter, reducing the width of the annular space and exerting lateral pressure on the end region of the plastics pipe received therein.

In certain embodiments, it may be preferred to manufacture the circumferential inner walls of the hollow, tubular enclosure from a relatively rigid material, or to provide it with a reinforcing layer, such that when the circumferential inner wall is pushed into the pipe it is a tight interference fit therein, and may even expand the bore of the plastics pipe slightly. This can ensure that an adequate supply of thermoplastic material is available to fill the fusion region around the inner heating element. The reinforcement can also impart stability to the inner wall when the material of the inner wall surrounding the electrical heating element is heated.

Similarly, the material of the circumferential outer wall of the connecting body can be made from a material which is slightly flexible so that it can be expanded outwards over the pipe end, to be in close contact with the outer surface of the plastics pipe once the pipe has been pushed into the annular space.

In some cases it is desirable that the electrofusion fitting should provide electrical continuity across a connection, especially between the reinforcing metal layers of two composite pipes to be connected. Such pipes are described in WO-A-9701429 mentioned hitherto. The electrofusion fitting of the present invention provides a particularly simple way of maintaining electrical continuity, and this is a preferred and further aspect of the invention. Electrical continuity can be provided, for example, by connecting the heating elements, either before or after fusion, to the adjacent ends of the electrically conductive layers of the pipes. Each electrofusion coil can, for example, be provided with terminal(s) which may be connected, either directly, or through mechanical gripping means, to the reinforcing metal layers. Electrical continuity is thereby provided through the terminals or through the mechanical gripping means which is capable of penetrating and piercing any oxide layer on the reinforcing metal layer, and thence through the electrofusion coils to the metal layer on the other composite pipe to be connected. Other methods of providing electrical continuity can also be provided, for example, mechanical gripping means could be provided which are directly connected or connected via the tubular enclosure if the enclosure is formed from a conductive material.

Certain embodiments of the invention will now be described, by way of example only, with reference to the accompanying Drawings in which:
Figure 1 is a longitudinal section of an electrofusion fitting configured as a connector;
Figure 2 shows a plan view of the two internal electrical heating elements illustrated as being unwound;
Figure 3 shows, in part sectional side elevation, a second electrofusion coupler and pipe joint of the invention wherein the plastics pipe ends are compressed before being received in the electrofusion fitting;
Figure 4 shows, in part sectional side elevation, a third electrofusion fitting according to the invention in which the fitting is provided with spreading means for penetrating the end wall of the plastics pipe;
Figure 5 shows, in sectional side elevation, a fragmentary view of a further electrofusion fitting according to the invention, and its application to the coupling of plastics pipes having a homogeneous wall;
Figure 6 shows, in sectional side elevation, the coupler of Figure 5 after electrofusion;
Figure 7 shows, in sectional side elevation, a fragmentary view of a still further embodiment of an electrofusion coupler according to the invention wherein the body is in two parts which are connected together;
Figure 8 shows in sectional view an electrofusion fitting according to the invention provided with gripping means;
Figure 9 shows a fragmentary sectional view of a joint formed using an electrofusion coupler according to the invention with means for maintaining electrical continuity across the joint; and
Figure 10 shows a fragmentary sectional view of a joint formed using a further electrofusion fitting according to the invention with gripping means and a conical inner wall.

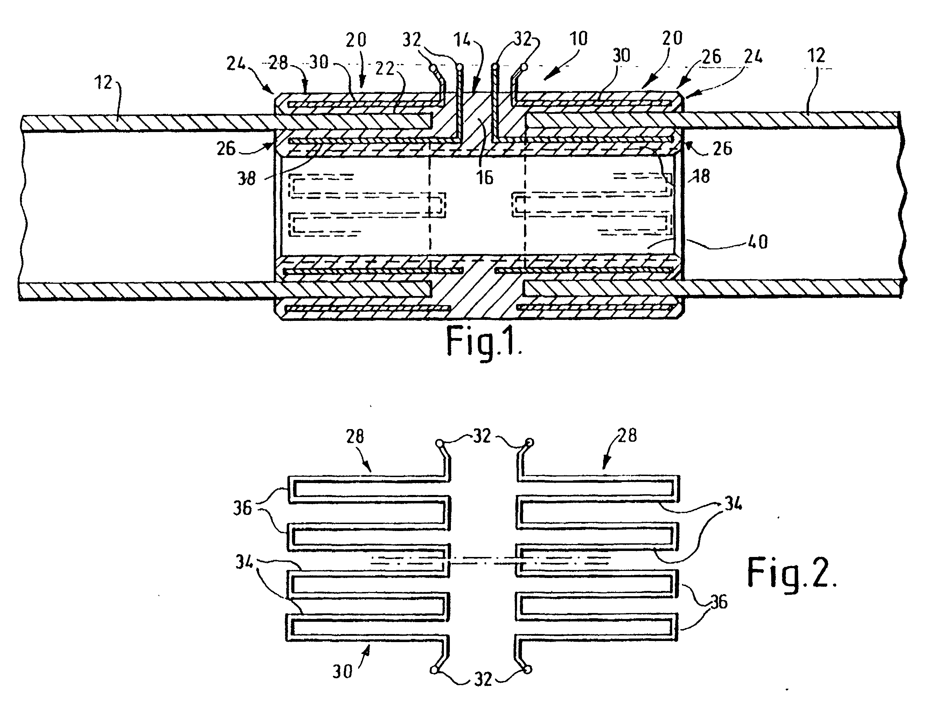

Referring firstly to Figure 1, there is shown a welding connector or welding sleeve 10 for connecting two plastic pipes 12 in longitudinal section, said plastic pipes being either pipes consisting of plastic over their entire wall thickness or plastic/metal composite pipes where a metal intermediate layer is interposed between two plastic layers. The welding fitting 10 comprises a tubular connecting body 14 of plastic. The connecting body 14 is provided with a solid central ring section 16 from which a cylindrical internal wall 18 is a cylindrical external wall 20 parallel and concentric thereto respectively extend at both sides in both axial directions. Between a respective internal wall 19 and a respective external wall 20, an annular space 22 is formed which is open towards one of the ends 24 of the connecting body 14.

In the regions of the walls 18 and 20 adjacent the annular spaces 22, electrical heating elements 26, 28 are embedded into the plastic material of the connecting body 14. Preferably, each of the electrical heating elements 26, 28 is configured as a serpentine heater band or heating wire 30 the connecting ends of which are led radially outward through the connecting body 14. The heater bands 30 of the heating elements 26 embedded into the internal walls 18 are shown in Figure 2 in an unwound state. these heater bands 30 comprise axially extended longitudinal sections 34 being connected via circumferentially extended connecting sections 36.

As shown in Figure 1, the ends of the plastic tube 12 are introduced into the annular spaces 32. By applying an electrical voltage to the connecting ends 32 of the heater bands 30 of the electrical heating elements 26 and 28, electric current flows through the heater bands 30, said current leading to a heater of the thermoplastic material of the connecting boyd 14 in the region near the annular space. Moreover, the heater bands 30 internally and externally heat the ends of the plastic tubes 12 received in the annular spaces 22 as well. As a result of the plastification of the material of the connecting body 14 and the plastic tube 12, an intimate connection between these two elements is established so that a reliable welding connection of the connecting body 14 and the plastic tubes 12 is formed after cooling. The internal wall 18 of the connecting body 14 have integrated therein a reinforcement insert 38 being particularly configured as a continuous sleeve of metal, a thermoplastic setting plastic material or a plastic material with a melting point being substantially higher than that of the plastic material plastifiable by the heating elements. Thereby, it is prevented that the internal wall 18 limiting the passage 40 of the connecting body 18 collapses in heated condition. In the region of the internal wall 18 near the passage, the reinforcement insert 38 is embedded in the material thereof.

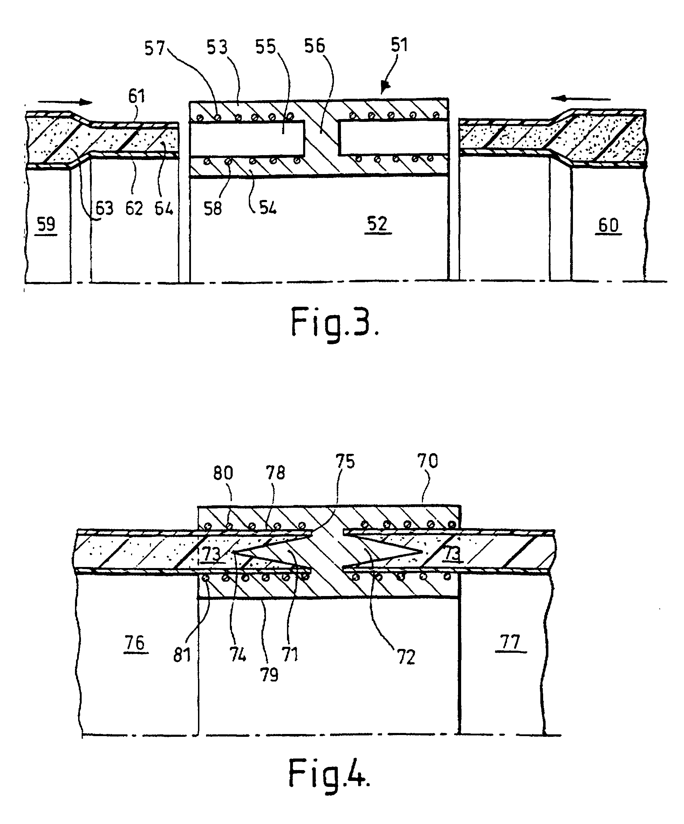

Referring next to Figure 3, there is shown an electrofusion coupler illustrated generally at 51 comprising a body portion 52 having an outer circumferential wall 53 and an inner circumferential wall 54 defining an annular space 55. The inner and outer walls 53, 54 are connected and spaced apart by a midsection 56.

Adjacent respectively the outer and inner surfaces of the annular space 55 are positioned electrical resistance heating coils 57 and 58 which are embedded respectively in the walls 53 and 54. The pipes 59 and 60 to be connected together are of multi-layer composite construction, comprising outer and inner plastics skin surfaces 61 and 62 and a foamed plastics core 63.

In use, the wall thicknesses of the pipes 59 and 60 at the ends thereof are reduced by compression means (not shown) so that the thickness at an end portion 64 is sufficient to enable the end portion to enter an annular space 55 in the electrofusion coupler 51. Once the plastic pipes 59, 60 have entered the annular spaces 55 of the electrofusion coupler 51, there will be a tendency for the pipe wall to expand resiliently towards its original thickness. In so doing, the inner and outer circumferential walls of the annular space 55 will constrain the expansion and thereby exert lateral pressure on the inner and outer surfaces of the thermoplastic pipes. This lateral pressure is maintained during electrofusion, and, after the electrical heating elements 57, 58 have been energised, and the walls 53, 54 fused to the plastics pipe surfaces 61, 62, it is found that voids in the annular space 55, caused be insufficient contact between the fusion surfaces and lack of filling by fused material, are substantially minimised.

Referring now to Figure 4, there is shown a third embodiment of an electrofusion coupler according to the invention, illustrated generally at 70. The coupler is substantially similar to that shown in Figure 3, except that the coupler 70 is provided with annular spreading means 71, 72 which project into the annular spaces 73. The annular spreading means 71, 72 have a conical section and a sharp point 74 for penetrating the end walls 75 of the multi-layer composite pipes 76 and 77.

In use, the multi-layer composite pipes 76, 77 are pushed into the annular spaces 73 of the electrofusion coupler 70 until the sharp points of the spreading means 71, 72 contact the end walls 75. The pipes 76, 77 are then driven into the coupler 70 until the end walls 75 bottom on the closed ends of the annular spaces 73. At this point the spreading means 71, 72 have penetrated the end walls 75 of the pipes and by a wedging action have forced the pipes into pressure contact with the outer and inner walls 78, 79 of the annular spaces 73. The heating coils 80, 81 are then energised in order to fuse the coupler to the pipes 76, 77. Again, by maintaining pressure on the outer and inner surfaces of the pipes 76, 77, the appearance of voids during electrofusion is substantially minimised.

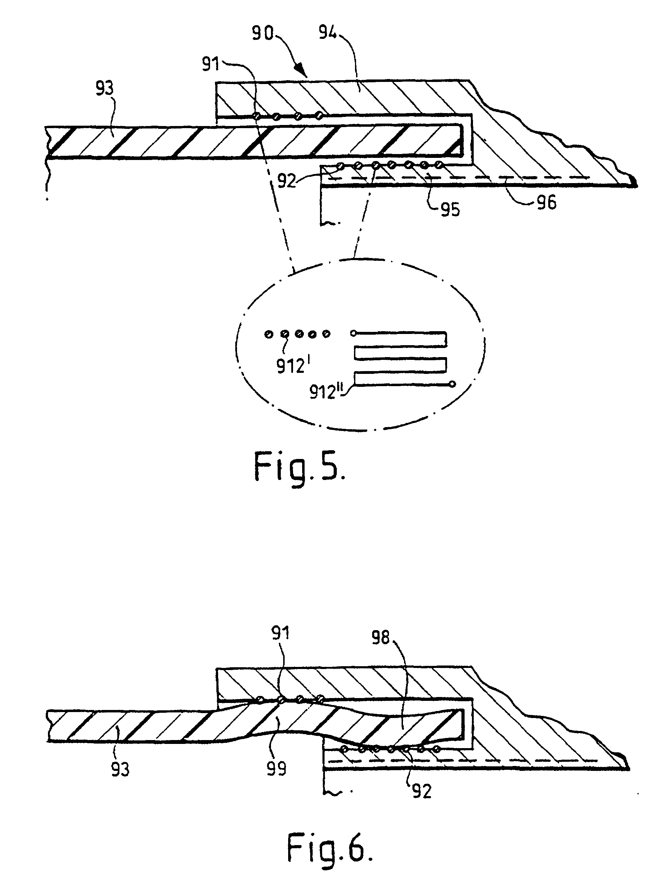

Referring now to Figure 5, there is shown a fragmentary view of an electrofusion coupler, illustrated generally at 90, wherein the electrofusion elements 91, 92 are offset, or staggered, in an axial direction, with respect to the plastics pipe 93 to be connected. As illustrated, the pipe 93 is of homogeneous construction, and, for example, the pipe wall can comprise extruded high density polyethylene. The coupler has outer and inner circumferential walls 94, 95 which, as illustrated, are of unequal length, although this is not essential. The inner wall 95 is provided with a reinforcing layer 96 of metal mesh.

The electrical heating elements 91, 92 can consist of electrical resistance heating wires in the form of helical coils or serpentine loops, as illustrated in the inset drawing.

The effect of electrofusion using the coupler of Figure 5 is shown in Figure 6, where the distortion of the pipe 93 has been greatly magnified to illustrate the principle involved. It can be seen that the portion 98 of the pipe end has sunk under the heat generated by the electrical heating element 92, thereby filling the fusion area around the electrical heating element 92 to give a broad area of fusion joint. In the portion 99 of the pipe 93, under the influence of the heat generated by the electrical heating element 91 fused material has been drawn from the pipe bore to fill the fusion area around the electrical heating element 91 to form another excellent fusion joint.

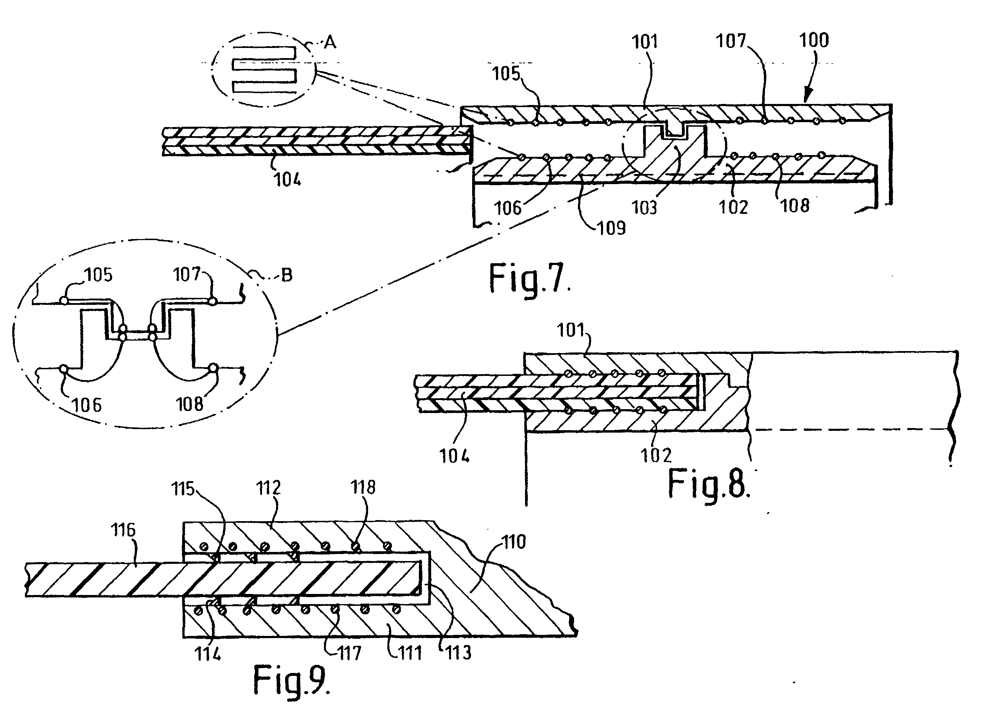

Referring now to Figures 7 and 8, there is shown a further embodiment of an electrofusion coupler according to the invention, illustrated generally at 100. The coupler comprises an outer body member 101 and an inner body member 102, which are spaced apart and connected together by a central connecting region 103. The connection is illustrated diagrammatically, but it could be either a threaded section or a push-fit or snap-fit coupling. If desired, the inner member 102 can be provided with a metal reinforcing member 109.

In use, the outer and inner members 101, 102 can be either pre-assembled and the multi-layer composite pipe 104 inserted therein, or the inner member 102 can first be inserted into the pipe 104 and the outer member 101 slid thereover. It is possible for the inner member 102 to be a tight fit in the pipe 104, thereby exerting pressure on the inner wall thereof, and for the outer member 101 to exert resilient pressure on the outer surface of the pipe 104, for example, if the inner diameter of the outer member 101 is slightly less than the outer diameter of the pipe 104.

The connection of the fusion coils 105, 106, 107 and 108 is shown diagrammatically in the inset drawing.

The assembled fusion joint is shown in Figure 9. The construction provides good pressure contact between the outer and inner members 101, 102 and the multi-layer composite plastics pipe 104, so that a good fusion joint is obtained.

Referring now to Figure 9, the electrofusion fitting 110 has an inner wall 111 and an outer wall 112, defining an annular space 113. Projecting into the annular space from respectively the inner and the outer walls are annular teeth 114, 115. When a pipe end 116 is inserted into the annular space 113 the teeth 114, 115 grip the pipe and resist its removal from the fitting. As shown the teeth 114, 115 are formed by metal rings, but other materials could also be used. After insertion of the pipe end 116, the heating elements 117, 118 are energised and the fusion joint completed.

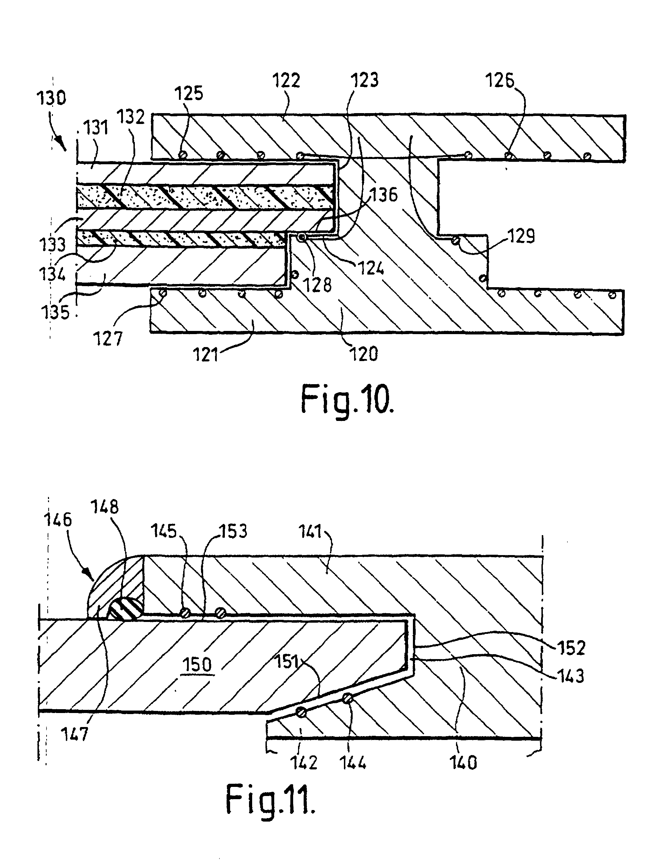

In Figure 10, the electrofusion coupler 120 has an inner wall 121 and an outer wall 122, defining an annular space 123. The inner wall has a step region 124 towards the closed end of the annular space 123. Adjacent the outer wall 122 there is positioned an electrical heating element 125, which is electrically connected to an identical element 126 on the other side of the coupler.

The inner wall also has a heating element 127, which extends around the step region 124 and is connected to an electrical contact 128. The contact 128 is connected to an identical contact 129 on the other side of the coupler. The electrofusion coupler can be used for jointing multi-layer composite pipes of some complexity. As illustrated, the pipe 130 has, taken in order from outside to inside, an outer conductive layer 131, a thick foam layer 132, an aluminium layer 133, a thin foam layer 134 and a high axial strength PEX layer 135. The pipe is prepared by cutting back a section of the layers 134, 135 to expose a length 136 of the aluminium layer 133, corresponding to the step 124. When the pipe end 130 is inserted into the annular space 133 the conductive layer 131 contacts the electrical heating element 125, and the length 136 of the aluminium layer contacts the electrical contact 128. In this way, electrical conductivity is maintained from the conductive layer 131 to the element 126 via the element 125, and from the aluminium layer 133 to the contact 129 via the contact 128. The element 126 and contact 129 can of course be connected to a further pipe end (not shown) prepared in the same way as pipe end 130.

After insertion of the pipe end 130 into the annular space 123 the elements 125 and 127 are energised, either simultaneously or sequentially to fuse the coupler 120 to the pipe end 130.

Referring now to Figure 11, the electrofusion fitting 140 has an outer cylindrical wall 141 and an inner conical wall 142 defining an annular space 143. The inner and outer walls are provided with heating elements 144 and 145 respectively. The outer wall 141 is also provided, at its free end, with a gripper 146 which comprises a threaded nut 147 which can be tightened on a thread (not shown) on the outer wall 141 and bears on a compression O-ring 148.

The fitting 140 is particularly useful for connecting foam pipes, and, as shown, a foam pipe 150 can be inserted into the annual space 143 until it abuts against the conical inner wall 141. Further travel of the pipe 150 compresses its lower end section 151 until the pipe bottoms on the end wall 152 of the annular space 143. The gripper 146 is then tightened so that the threaded nut 147 compresses the O-ring 148 which in turn exerts a gripping force on the pipe outer surface 153. After the pipe has been fully inserted the heating elements 144 and 145 are energised, either sequentially or simultaneously, to fuse the electrofusion fitting 140 to the pipe 150.

## Claims

1. An electrofusion fitting (90) for a plastics pipe (93), which comprises a hollow, tubular enclosure comprising a body to which an end of the plastics pipe can be connected, the body comprising at least one circumferential inner wall (95) and at least one circumferential outer wall (94) concentric therewith, the inner and outer walls forming an annular space for receiving the end of the plastics pipe, and comprising thermoplastic material at least in their regions adjacent to the annular space, at least one electrical heating element (91,92) for heating the thermoplastic material of the inner and outer walls being located adjacent to, or embedded in, each of the said at least one inner wall and said at least one outer wall in their regions adjacent the annular space, **characterised in that** said heating elements of the inner and outer walls of the body of the fitting are offset with respect to each other in an axial direction.

2. An electrofusion fitting according to claim 1, wherein the inner heating element is disposed adjacent to the closed end of the annular space, and the outer heating element is disposed at a distance from the closed end such that it does not axially overlap the inner heating element.

3. An electrofusion fitting according to claim 1 or 2, wherein the tubular enclosure comprises an integral body.

4. An electrofusion fitting according to claim 1 or 2, wherein the tubular enclosure comprises two or more hollow body members (101,102) which can be separately installed and connected.

5. An electrofusion fitting according to claim 4, wherein the enclosure comprises a first hollow body member (102) comprising the at least one circumferential inner wall of the body, and a second hollow body member (101) comprising the at least one circumferential outer wall of the body.

6. An electrofusion fitting according to any of the preceding claims, wherein the annular space is formed by a plastic insert member which is interposed between the inner wall and the outer wall and on or in which the electrical heating element(s) are located.

7. An electrofusion fitting according to any of the preceding claims, wherein the plastics material of the body in which the electrical heating elements are embedded has a lower melting point than the material or materials of which the remaining region of the body is made.

8. An electrofusion fitting according to any of the preceding claims, wherein the body comprises a reinforcement (96) in the region of its at least one inner wall.

9. An electrofusion fitting according to claim 8, wherein the reinforcement comprises a perforated or non-perforated metal sleeve (96) and/or which comprises a thermosetting plastics material.

10. An electrofusion fitting according to any of the preceding claims, wherein the heating elements comprise electrical resistance heating elements or induction heating elements.

11. An electrofusion fitting according to any of the preceding claims, wherein the electrical heating elements are formed from serpentine coils (912") of electrical resistance wire.

12. An electrofusion fitting according to any of the preceding claims, wherein the thermoplastic material comprises polyethylene.

13. An electrofusion fitting according to any of the preceding claims, wherein means (114,115) are provided for gripping and/or for applying lateral pressure on the end of the plastics pipe received in the annular space during fusion.

14. An electrofusion fitting according to claim 13, wherein the gripping means comprises a series of two or more infusible teeth (114,115) which are radially disposed around the annular space and protrude into the annular space so that, in use, they are capable of contacting and gripping the outer and/or inner surfaces of the plastics pipe.

15. An electrofusion fitting according to any of the preceding claims, wherein the width of the annular space is slightly less than the thickness of the plastics pipe wall.

16. An electrofusion fitting according to claim 15, wherein the body of the electrofusion fitting comprises an inner and an outer body member which are assembled to form the annular space for receiving the end of the plastics pipe, and wherein the relative dimensions of the inner and outer body members are so arranged that, on assembly of the body of the electrofusion fitting around the end of the plastics pipe, the circumferential inner and outer walls of the annular space exert lateral pressure on an end region of the plastics pipe.

17. An electrofusion fitting according to any of the preceding claims, wherein the material of the hollow tubular enclosure comprising the circumferential outer wall of the annular space is formed from a heat recoverable material.

18. An electrofusion fitting (70) for a plastics pipe, which comprises a hollow, tubular enclosure comprising a body to which an end of the plastics pipe can be connected, the body comprising at least one circumferential inner wall (79) and at least one circumferential outer wall (78) concentric therewith, the inner and outer walls forming an annular space (73) for receiving the end of the plastics pipe, and comprising thermoplastic material at least in their regions adjacent to the annular space, at least one electrical heating element (80,81) for heating the thermoplastic material of the inner and outer walls being located adjacent to, or embedded in, each of the said at least one inner wall and said at least one outer wall in their regions adjacent the annular space, **characterised in that** the body is provided with an annular spreading member (71,72) which projects into the annular space from a closed end (75) of the said space, such that, in use, when the plastics pipe is pushed into the annular space, the annular spreading member penetrates into the end wall of the plastics pipe exerting a spreading action thereon.

19. An electrofusion fitting as claimed in claim 18 having the additional features identified in any of claims 1 to 17.

20. An electrofusion fitting (120) for a plastics pipe, which comprises a hollow, tubular enclosure comprising a body to which an end of the plastics pipe (130) can be connected, the body comprising at least one circumferential inner wall (121) and at least one circumferential outer wall (122) concentric therewith, the inner and outer walls forming an annular space (123) for receiving the end of the plastics pipe, and comprising thermoplastic material at least in their regions adjacent to the annular space, at least one electrical heating element (125, 12) for heating the thermoplastic material of the inner and outer walls being located adjacent to, or embedded in, each of the said at least one inner wall and said at least one outer wall in their regions adjacent the annular space, **characterised in that** the fitting is adapted to connect multi-layer composite pipes having electrically conductive layers (131, 133), and wherein the fitting is provided with contact means (125, 126, 128, 129) for contacting electrically conductive layers (131, 133) on the multi-layer composite pipes, said contact means being connected in order to provide electrical continuity across the connection.

21. An electrofusion fitting as claimed in claim 20 having the additional features identified in any of claims 1 to 19.

22. A method for connecting a plastics pipe (76, 77, 150) wherein there is used an eletrofusion fitting (70, 140) comprising a hollow, tubular enclosure comprising a body to which an end of the platics pipe can be connected, the body comprising at least one circumferential inner wall (79, 142) and at least one circumferential outer wall (78, 141) concentric therewith, the inner and outer walls forming an annular space (73, 143) for receiving the end of the plastics pipe and comprising thermoplastic material in their regions adjacent the annular space, at least one electrical heating element (80, 81, 144, 145) for heating the thermoplastic material of the inner and outer walls being located to, or embedded in, each of said at least one inner wall and said at least one outer wall in their regions adjacent the annular space, wherein the body of the electrofusion fitting is provided with an annular spreading member (71, 72, 142) which projects into the annular space from a closed end (152) of the said space, which method comprises:
pushing the plastics pipe (76, 77) into the annular space (73, 143) of the hollow, tubular enclosure so that the annular spreading member (71, 72, 142) penetrates into the end wall of the plastics pipe exerting a spreading action thereon; and
energising the heating elements (80, 81) to fuse the thermoplastic material and form a fusion bond to the plastics pipe.

23. A method according to claim 22, wherein a gripping force and/or lateral pressure is applied to the end of the plastics pipe (59, 60) during fusion by the fitting (51).

24. A method according to claim 22 or 23, wherein the hollow, tubular enclosure (100) comprises a first hollow body member (102) comprising the at least one circumferential inner wall of the body, and a second hollow body member (101) comprising the at least one circumferential outer wall of the body, and wherein the hollow members are sequentially installed on the plastics pipe.

25. A method according to any of claims 22 to 24, wherein the width of the annular space 55 is slightly less than the thickness of the wall of the plastics pipe (59, 60) and the plastics pipe wall is compressed, or the annular space is expanded, in order to permit the plastics pipe end (64) to be received in the annular space.

26. A method according to any of claims 22 to 25, which comprises assembling an inner body member (102) and an outer body member (101) to form the annular space for receiving the end of the plastics pipe (104), the relative dimensions of the inner and outer body members being arranged so that on assembly of the body of the eletrofusion fitting (100) around the end of the plastics pipe, the circumferential inner and outer walls of the annular space exert lateral pressure on an end region of the plastics pipe.

27. A method according to any of claims 22 to 26, wherein the material of the hollow, tubular enclosure comprising the circumferential outer wall of the annular space is formed from a heat recoverable material, and wherein the end of the plactics pipe is disposed in the annular space and the heat recoverable material is heated in order to recover the circumferential outer wall to be smaller diameter, reducing the width of the annual space and exerting later pressure on the end region of the plastics pipe received therein.

28. A method according to any of claims 22 to 27, wherein the circumferential inner wall (142) of the hollow, tubular enclosure (140) is pushed into the pipe (150) to expand the bore of the plastics pipe.

## Patentansprüche

1. Elektroschweißkupplungsvorrichtung (90) für ein Kunststoffrohr (93), mit einer hohlen, röhrenförmigen Einfassung mit einem Körper, mit dem ein Ende des Kunststoffrohrs verbindbar ist, wobei der Körper mindestens eine umfangsmäßig verlaufende Innenwand (95) und mindestens eine konzentrisch zu dieser umfangsmäßig verlaufende Außenwand (94) aufweist, wobei die Innen- und Außenwände einen Ringraum zur Aufnahme des Endes des Kunststoffrohrs bilden und ferner thermoplastisches Material mindestens in ihren an den Ringraum angrenzenden Bereichen aufweisen, mit mindestens einem elektrischen Heizelement (91,92) zum Heizen des thermoplastischen Materials der Innen- und Außenwände, das an jeder der mindestens einen Innenwand und der mindestens einen Außenwand in deren an den Ringraum angrenzenden Bereichen angeordnet ist oder in die Wand eingebettet ist,
**dadurch gekennzeichnet, dass** die Heizelemente der Innen- und Außenwände des Körpers der Kupplungsvorrichtung in einer Axialrichtung zueinander versetzt sind.

2. Elektroschweißkupplungsvorrichtung nach Anspruch 1, bei der das innere Heizelement an dem geschlossenen Ende des Ringraums angeordnet ist und das äußere Heizelement mit einem Abstand von dem geschlossenen Ende derart angeordnet ist, dass es sich nicht mit dem inneren Heizelement axial überlappt.

3. Elektroschweißkupplungsvorrichtung nach Anspruch 1 oder 2, bei der die röhrenförmige Einfassung einen einstückigen Körper aufweist.

4. Elektroschweißkupplungsvorrichtung nach Anspruch 1 oder 2, bei der die röhrenförmige Einfassung zwei oder mehr hohle Körperteile (101,102) aufweist, die separat installierbar und verbindbar sind.

5. Elektroschweißkupplungsvorrichtung nach Anspruch 4, bei der die Einfassung einen ersten hohlen Körperteil (102), der die mindestens eine umfangsmäßig verlaufende Innenwand des Körpers aufweist, und einen zweiten hohlen Körperteil (101) hat, der die mindestens eine umfangsmäßig verlaufende Außenwand des Körpers aufweist.

6. Elektroschweißkupplungsvorrichtung nach einem der vorhergehenden Ansprüche, bei der der Ringraum durch ein Kunststoff-Einsatzteil gebildet ist, das zwischen den Innenwand und der Außenwand angeordnet ist und an oder in dem das elektrische Heizelement bzw. die elektrischen Heizelemente angeordnet sind.

7. Elektroschweißkupplungsvorrichtung nach einem der vorhergehenden Ansprüche, bei der das Kunststoffmaterial des Körpers, in den die elektrischen Heizelemente eingebettet sind, einen niedrigeren Schmelzpunkt hat als das Material oder die Materialien, aus denen der übrige Bereich des Körpers besteht.

8. Elektroschweißkupplungsvorrichtung nach einem der vorhergehenden Ansprüche, bei der der Körper eine Verstärkung (96) im Bereich seiner mindestens einen Innenwand aufweist.

9. Elektroschweißkupplungsvorrichtung nach Anspruch 8, bei der die Verstärkung eine perforierte oder nichtperforierte Metallhülse (96) aufweist und/oder ein wärmehärtbares Kunststoffmaterial aufweist.

10. Elektroschweißkupplungsvorrichtung nach einem der vorhergehenden Ansprüche, bei der die Heizelemente Elektrowiderstands-Heizelemente oder Induktionsheizelemente aufweisen.

11. Elektroschweißkupplungsvorrichtung nach einem der vorhergehenden Ansprüche, bei der die elektrischen Heizelemente aus Serpentinenspulen (912") aus elektrisch widerstandsfähigem Draht ausgebildet sind.

12. Elektroschweißkupplungsvorrichtung nach einem der vorhergehenden Ansprüche, bei der das thermoplastische Material Polyethlyen aufweist.

13. Elektroschweißkupplungsvorrichtung nach einem der vorhergehenden Ansprüche, bei der Vorrichtungen (114,115) vorgesehen sind, um das Ende des bei der Fusion in dem Ringraum aufgenommenen Kunststoffrohrs zu greifen oder lateralen Druck auf dieses auszuüben.

14. Elektroschweißkupplungsvorrichtung nach einem der vorhergehenden Ansprüche, bei der die Greifvorrichtungen eine Reihe von zwei oder mehr schmelzbaren Zähnen (114,115) aufweisen, die radial um den Ringraum angeordnet sind und in den Ringraum hineinragen, derart, dass sie bei Verwendung in der Lage sind, die Außen- und/oder Innenflächen des Kunststoffrohrs zu kontaktieren und zu greifen.

15. Elektroschweißkupplungsvorrichtung nach einem der vorhergehenden Ansprüche, bei der die Breite des Ringraums etwas kleiner ist als die Dicke der Kunststoffrohr-Wand.

16. Elektroschweißkupplungsvorrichtung nach Anspruch 15, bei der der Körper der Elektroschweißkupplungsvorrichtung ein inneres und ein äußeres Körperteil aufweist, die zur Bildung des zur Aufnahme des Endes des Kunststoffrohrs vorgesehenen Ringraums zusammengefügt sind, und bei der die Relativbemessungen der inneren und äußeren Körperteile derart ausgelegt sind, dass beim Anordnen des Körpers der Elektroschweißkupplungsvorrichtung um das Ende des Kunststoffrohrs die umfangsmäßigen Innen- und Außenwände des Ringraums Lateraldruck auf einen Endbereich des Kunststoffrohrs ausüben.

17. Elektroschweißkupplungsvorrichtung nach einem der vorhergehenden Ansprüche, bei der das Material der hohlen röhrenförmigen Einfassung, die die umfangsmäßig verlaufende Außenwand des Ringraums aufweist, aus einem wärmerückstellbaren Material gebildet ist.

18. Elektroschweißkupplungsvorrichtung (70) für ein Kunststoffrohr, mit einer hohlen, röhrenförmigen Einfassung mit einem Körper, mit dem ein Ende des Kunststoffrohrs verbindbar ist, wobei der Körper mindestens eine umfangsmäßig verlaufende Innenwand (79) und mindestens eine konzentrisch zu dieser umfangsmäßig verlaufende Außenwand (78) aufweist, wobei die Innen- und Außenwände einen Ringraum (73) zur Aufnahme des Endes des Kunststoffrohrs bilden und ferner thermoplastisches Material mindestens in ihren an den Ringraum angrenzenden Bereichen aufweisen, mit mindestens einem elektrischen Heizelement (80,81) zum Heizen des thermoplastischen Materials der Innen- und Außenwände, das an jeder der mindestens einen Innenwand und der mindestens einen Außenwand in deren an den Ringraum angrenzenden Bereichen angeordnet ist oder in die Wand eingebettet ist,
**dadurch gekennzeichnet, dass** der Körper mit einem ringförmigen Spreizteil (71,72) versehen ist, das von einem geschlossenen Ende (75) des Raums in den Ringraum derart hineinragt, dass bei Benutzung, wenn das Kunststoffrohr in den Ringraum hineingedrückt wird, das ringförmige Spreizteil in die Endwand des Kunststoffrohrs eindringt und dabei eine Spreizwirkung auf die Endwand ausübt.

19. Elektroschweißkupplungsvorrichtung nach Anspruch 18, mit den zusätzlichen Merkmalen nach einem der Ansprüche 1 bis 17.

20. Elektroschweißkupplungsvorrichtung (120) für ein Kunststoffrohr, mit einer hohlen, röhrenförmigen Einfassung mit einem Körper, mit dem ein Ende des Kunststoffrohrs (130) verbindbar ist, wobei der Körper mindestens eine umfangsmäßig verlaufende Innenwand (121) und mindestens eine konzentrisch zu dieser umfangsmäßig verlaufende Außenwand (122) aufweist, wobei die Innen- und Außenwände einen Ringraum (123) zur Aufnahme des Endes des Kunststoffrohrs bilden und ferner thermoplastisches Material mindestens in ihren an den Ringraum angrenzenden Bereichen aufweisen, mit mindestens einem elektrischen Heizelement (125,126) zum Heizen des thermoplastischen Materials der Innen- und Außenwände, das an jeder der mindestens einen Innenwand und der mindestens einen Außenwand in deren an den Ringraum angrenzenden Bereichen angeordnet ist oder in die Wand eingebettet ist,
**dadurch gekennzeichnet, dass** die Kupplungsvorrichtung zum Verbinden mehrwandiger Composite-Rohre mit elektrisch leitenden Schichten (131, 133) in der Lage ist, und dass die Kupplungsvorrichtung mit Kontaktvorrichtungen (125,126,128,129) zum Kontaktieren elektrisch leitender Schichten (131,133) der mehrwandigen Composite-Rohre versehen ist, wobei die Kontaktvorrichtungen zwecks Erzeugen elektrischer Kontinuität über die gesamte Verbindung hinweg geschaltet sind.

21. Elektroschweißkupplungsvorrichtung nach Anspruch 20, mit den zusätzlichen Merkmalen nach einem der Ansprüche 1 bis 19.

22. Verfahren zum Verbinden eines Kunststoffrohrs (76,77,150) unter Verwendung einer Elektroschweißkupplungsvorrichtung (70,140) mit einer hohlen, röhrenförmigen Einfassung mit einem Körper, mit dem ein Ende des Kunststoffrohrs verbindbar ist, wobei der Körper mindestens eine umfangsmäßig verlaufende Innenwand (79,142) und mindestens eine konzentrisch zu dieser umfangsmäßig verlaufende Außenwand aufweist, wobei die Innen- und Außenwände einen Ringraum (73,143) zur Aufnahme des Endes des Kunststoffrohrs bilden und thermoplastisches Material mindestens in ihren an den Ringraum angrenzenden Bereichen aufweisen, mit mindestens einem elektrischen Heizelement (80,81,144) zum Heizen des thermoplastischen Materials der Innen- und Außenwände, das an jeder der mindestens einen Innenwand und der mindestens einen Außenwand in deren an den Ringraum angrenzenden Bereichen angeordnet ist oder in die Wand eingebettet ist, wobei der Körper mit einem ringförmigen Spreizteil (71,72,142) versehen ist, das von einem geschlossenen Ende (152) des Raums in den Ringraum hineinragt, mit den folgenden Schritten:
Drücken des Kunststoffrohrs (76,77) in den Ringraum (73,143) der hohlen, röhrenförmigen Einfassung derart, dass das ringförmige Spreizteil (71,72,142) in die Endwand des Kunststoffrohrs eindringt und dabei eine Spreizwirkung auf die Endwand ausübt; und
Aktivieren der Heizelemente (80,81) zum Schmelzen des thermoplastischen Materials zum Ausbilden einer Fusionsverbindung mit dem Kunststoffrohr.

23. Verfahren nach Anspruch 22, bei dem während des Schmelzens durch die Kupplungsvorrichtung (51) eine Greifkraft und/oder ein Lateraldruck auf das Ende des Kunststoffrohrs (59,60) ausgeübt wird.

24. Verfahren nach Anspruch 22 oder 23, bei dem die hohle, röhrenförmige Einfassung (100) einen ersten hohlen Körperteil (102), der die mindestens eine umfangsmäßig verlaufende Innenwand des Körpers aufweist, und einen zweiten hohlen Körperteil (101) hat, der die mindestens eine umfangsmäßig verlaufende Außenwand des Körpers aufweist, und bei dem die hohlen Teile aufeinanderfolgend an dem Kunststoffrohr installiert sind.

25. Verfahren nach einem der Ansprüche 22 bis 24, bei dem die Breite des Ringraums etwas kleiner ist als die Dicke der Wand des Kunststoffrohrs (59,60) und die Kunststoffrohr-Wand zusammengedrückt wird oder der Ringraum gedehnt wird, um die Aufnahme des Kunststoffrohr-Endes (64) in dem Ringraum zu ermöglichen.

26. Verfahren nach einem der Ansprüche 22 bis 25, bei dem ein innerer Körperteil (102) und ein äußerer Körperteil (102) zusammengefügt werden, um den Ringraum zur Aufnahme des Endes des Kunststoffrohrs (104) zu bilden, wobei die Relativbemessungen der inneren und äußeren Körperteile derart ausgelegt sind, dass beim Anordnen des Körpers der Elektroschweißkupplungsvorrichtung (100) um das Ende des Kunststoffrohrs die umfangsmäßigen Innen- und Außenwände des Ringraums Lateraldruck auf einen Endbereich des Kunststoffrohrs ausüben.

27. Verfahren nach einem der Ansprüche 22 bis 26, bei dem das Material der hohlen röhrenförmigen Einfassung, die die umfangsmäßig verlaufende Außenwand des Ringraums aufweist, aus einem wärmerückstellbaren Material gebildet ist, und bei dem das Ende des Kunststoffrohrs in dem Ringraum angeordnet wird und das wärmerückstellbare Material erwärmt wird, um die Umfangswand derart rückzustellen, dass diese einen kleineren Durchmesser hat, wodurch die Breite des Ringraums reduziert wird und Lateraldruck auf den von ihm aufgenommen Endbereich des Kunststoffrohrs ausgeübt wird.

28. Verfahren nach einem der Ansprüche 22 bis 27, bei dem die umfangsmäßig verlaufende Innenwand (142) der hohlen, röhrenförmigen Einfassung (140) in das Rohr (150) gedrückt wird.

## Revendications

1. Raccord à électrofusion (90) destiné à un tuyau en plastique (93), qui comprend une enceinte creuse tubulaire comprenant un corps auquel une extrémité du tuyau en plastique peut être raccordée, le corps comprenant au moins une paroi circonférentielle intérieure (95) et au moins une paroi circonférentielle extérieure (94) concentriques, les parois intérieure et extérieure formant un espace en anneau destiné à recevoir l'extrémité du tuyau en plastique, et comprenant un matériau thermoplastique au moins dans leurs régions qui sont adjacentes à l'espace en anneau, au moins un élément de chauffage électrique (91, 92) destiné à chauffer le matériau thermoplastique des parois intérieure et extérieure qui est adjacent ou intégré à chacune desdites au moins une paroi intérieure et au moins une paroi extérieure dans les régions de celles-ci qui sont adjacentes à l'espace en anneau, **caractérisé en ce que** lesdits éléments de chauffage des parois intérieure et extérieure du corps du raccord sont décalés l'un par rapport à l'autre dans une direction axiale.

2. Raccord à électrofusion selon la revendication 1, dans lequel l'élément de chauffage intérieur est disposé en étant adjacent à l'extrémité fermée de l'espace en anneau, et l'élément de chauffage extérieur est disposé à une certaine distance de l'extrémité fermée pour qu'il ne puisse pas chevaucher axialement l'élément de chauffage intérieur.

3. Raccord à électrofusion selon la revendication 1 ou 2, dans lequel l'enceinte tubulaire comprend un corps réalisé d'une pièce.

4. Raccord à électrofusion selon la revendication 1 ou 2, dans lequel l'enceinte tubulaire comprend deux ou plusieurs éléments creux formant corps (101, 102) qui peuvent être installés séparément et connectés.

5. Raccord à électrofusion selon la revendication 4, dans lequel l'enceinte tubulaire comprend un premier élément creux formant corps (102) comprenant ladite au moins une paroi circonférentielle intérieure du corps, et un deuxième élément creux formant corps (101) comprenant ladite au moins une paroi circonférentielle extérieure du corps.

6. Raccord à électrofusion selon l'une quelconque des revendications précédentes, dans lequel l'espace en anneau est formé par un élément d'insert en plastique qui est interposé entre la paroi intérieure et la paroi extérieure et sur lequel ou dans lequel le ou les élément(s) de chauffage électrique est (sont) placé(s).

7. Raccord à électrofusion selon l'une quelconque des revendications précédentes, dans lequel le matériau en plastique du corps dans lequel les éléments de chauffage électrique sont intégrés possède un point de fusion inférieur à celui du ou des matériaux constituant la région restante du corps.

8. Raccord à électrofusion selon l'une quelconque des revendications précédentes, dans lequel le corps comprend un renforcement (96) dans la région de ladite au moins une paroi intérieure.

9. Raccord à électrofusion selon la revendication 8, dans lequel le renforcement comprend un manchon métallique perforé ou non perforé (96) et/ou qui comprend un matériau plastique thermodurcissable.

10. Raccord à électrofusion selon l'une quelconque des revendications précédentes, dans lequel les éléments de chauffage comprennent des éléments de chauffage à résistance électrique ou des éléments de chauffage à induction.

11. Raccord à électrofusion selon l'une quelconque des revendications précédentes, dans lequel les éléments de chauffage électrique sont constitués de bobines en serpentin (912") en fil électriquement résistant.

12. Raccord à électrofusion selon l'une quelconque des revendications précédentes, dans lequel le matériau thermoplastique comprend du polyéthylène.

13. Raccord à électrofusion selon l'une quelconque des. revendications précédentes, dans lequel des moyens (114, 115) sont disposés pour saisir et/ou pour appliquer une pression latérale sur l'extrémité du tuyau en plastique qui est reçue dans l'espace en anneau pendant la fusion.

14. Raccord à électrofusion selon la revendication 13, dans lequel les moyens de préhension comprennent un ensemble de deux ou plusieurs dents (114, 115) qui sont disposées radialement autour de l'espace en anneau et font saillie en pénétrant dans l'espace en anneau de façon à ce qu'en utilisation, elles puissent entrer en contact et saisir les surfaces extérieure et/ou intérieure du tuyau en plastique.

15. Raccord à électrofusion selon l'une quelconque des revendications précédentes, dans lequel la largeur de l'espace en anneau est légèrement inférieure à l'épaisseur de la paroi du tuyau en plastique.

16. Raccord à électrofusion selon la revendication 15, dans lequel le corps du raccord à électrofusion comprend un élément intérieur faisant corps et un élément extérieur faisant corps qui sont montés pour constituer un espace en anneau destiné à recevoir l'extrémité du tuyau en plastique, et dans lequel les dimensions relatives des éléments intérieur et extérieur faisant corps sont telles que lorsqu'on monte le corps du raccord à électrofusion autour de l'extrémité du tuyau en plastique, les parois circonférentielles intérieure et extérieure de l'espace en anneau exercent une pression latérale sur une région d'extrémité du tuyau en plastique.

17. Raccord à électrofusicn selon l'une quelconque des revendications précédentes, dans lequel le matériau constituant l'enceinte tubulaire creuse comprenant la paroi circonférentielle extérieure de l'espace en anneau est formée à partir d'un matériau régénérable à la chaleur.

18. Raccord à électrofusion (70) destiné à un tuyau en plastique, qui comprend une enceinte creuse tubulaire comprenant un corps auquel une extrémité du tuyau en plastique peut être raccordée, le corps comprenant au moins une paroi circonférentielle intérieure (79) et au moins une paroi circonférentielle extérieure (78) concentriques, les parois intérieure et extérieure formant un espace en anneau (73) destiné à recevoir l'extrémité du tuyau en plastique, et comprenant un matériau thermoplastique au moins dans leurs régions qui sont adjacentes à l'espace en anneau, au moins un élément de chauffage électrique (80, 81) destiné à chauffer le matériau thermoplastique des parois intérieure et extérieure et qui est adjacent ou intégré à chacune desdites au moins une paroi intérieure et au moins une paroi extérieure dans les régions de celles-ci qui sont adjacentes à l'espace en anneau, **caractérisé en ce que** le corps est pourvu d'un élément d'écartement en anneau (71, 72) qui fait saillie et pénètre dans l'espace en anneau depuis une extrémité fermée (75) dudit espace, de façon à ce qu'en utilisation, lorsqu'on pousse le tuyau en plastique dans l'espace en anneau, l'élément d'écartement en anneau pénètre dans la paroi d'extrémité au tuyau en plastique en exerçant une action d'écartement sur celui-ci.

19. Raccord à électrofusion selon la revendication 18 ayant les caractéristiques supplémentaires identifiées dans l'une quelconque des revendications 1 à 17.

20. Raccord à électrofusion (120) destiné à un tuyau en plastique, qui comprend une enceinte creuse tubulaire comprenant un corps auquel une extrémité du tuyau en plastique (130) peut être raccordée, le corps comprenant au moins une paroi circonférentielle intérieure (121) et au moins une paroi circonférentielle extérieure (122) concentriques, les parois intérieure et extérieure formant un espace en anneau (123) destiné à recevoir l'extrémité du tuyau en plastique, et comprenant un matériau thermoplastique au moins dans leurs régions qui sont adjacentes à l'espace en anneau, au moins un élément de chauffage électrique (125, 126) destiné à chauffer le matériau thermoplastique des parois intérieure et extérieure et qui est adjacent ou intégré à chacune desdites au moins une paroi intérieure et au moins une paroi extérieure dans les régions de celles-ci qui sont adjacentes à l'espace en anneau, **caractérisé en ce que** le raccord est prévu pour raccorder des tuyaux en matériau composite multicouches ayant des couches électriquement conductrices (131, 133) et dans lequel le raccord est muni de moyens de contact (125, 126, 128, 129) destinés à entrer électriquement en contact avec les couches conductrices (131, 133) des tuyaux en matériau composite multicouches, lesdits moyens de contact étant connectés de façon à fournir une continuité électrique à travers la connexion.

21. Raccord à électrofusion selon la revendication 20, ayant les caractéristiques supplémentaires qui sont identifiées dans l'une quelconque des revendications 1 à 19.

22. Procédé permettant de raccorder un . tuyau en plastique (76, 77, 150), dans lequel on utilise un raccord à électrofusion (70, 140) comprenant une enceinte creuse tubulaire comprenant un corps auquel une extrémité du tuyau en plastique peut être raccordée, le corps comprenant au moins une paroi circonférentielle intérieure (79, 142) et au moins une paroi circonférentielle extérieure (78, 141) concentriques, les parois intérieure et extérieure formant un espace en anneau (73, 143) destiné à recevoir l'extrémité du tuyau en plastique, et un matériau thermoplastique au moins dans leurs régions qui sont adjacentes à l'espace en anneau, au moins un élément de chauffage électrique (80, 81, 144, 145) destiné à chauffer le matériau thermoplastique des parois intérieure et extérieure et qui est adjacent ou intégré à chacune desdites au moins une paroi intérieure et au moins une paroi extérieure dans les régions de celles-ci qui sont adjacentes à l'espace en anneau, le corps du raccord à électrofusion étant muni d'un élément d'écartement en anneau (71, 72, 142) qui fait saillie et pénètre dans l'espace en anneau en partant d'une extrémité fermée (152) dudit espace, procédé comprenant les étapes consistant à :
pousser le tuyau en plastique (76, 77) dans l'espace en anneau (73, 143) de l'enceinte creuse tubulaire de façon à ce que l'élément d'écartement en anneau (71, 72, 142) pénètre dans la paroi d'extrémité du tuyau en plastique en exerçant une action d'écartement sur celui-ci ; et à
exciter les éléments de chauffage (80, 81) pour mettre en fusion le matériau thermoplastique et former une liaison par fusion au tuyau en plastique.

23. Procédé selon la revendication 22, dans lequel une force de préhension et/ou une pression latérale est appliquée à l'extrémité du tuyau en plastique (59, 60) pendant la fusion effectuée par le raccord (51).

24. Méthode selon la revendication 22 ou 23, dans lequel l'enceinte tubulaire creuse (100) comprend un premier élément creux formant corps (102) comprenant ladite au moins une paroi circonférentielle intérieure du corps, et un deuxième élément creux faisant corps (101) comprenant ladite au moins une paroi circonférentielle extérieure du corps, et dans laquelle les éléments creux sont installés sur le tuyau en plastique de manière séquentielle.

25. Procédé selon l'une quelconque des revendications 22 à 24, dans lequel la largeur de l'espace en anneau (55) est légèrement inférieure à l'épaisseur de la paroi du tuyau en plastique (59, 60) et dans laquelle soit la paroi du tuyau en plastique est comprimée, soit l'espace en anneau est dilaté, afin de permettre à l'extrémité (64) du tuyau en plastique d'être reçue dans l'espace en anneau.

26. Procédé selon l'une quelconque des revendications 22 à 25, qui comprend l'étape consistant à monter un élément intérieur formant corps (102) et un élément extérieur formant corps (101) pour former, l'espace en anneau destiné à recevoir l'extrémité du tuyau en plastique (104), les dimensions relatives des éléments intérieur et extérieur formant corps étant telles que lors du montage du corps du raccord à électrofusion (100) autour de l'extrémité du tuyau en plastique, les parois circonférentielles intérieure et extérieure de l'espace en anneau exercent une pression latérale sur une région d'extrémité du tuyau en plastique.

27. Procédé selon l'une quelconque des revendications 22 à 26, dans lequel le matériau de l'enceinte creuse tubulaire qui comprend la paroi circonférentielle extérieure de l'espace en anneau est constitué d'un matériau régénérable à la chaleur, et dans lequel l'extrémité du tuyau en plastique est disposée dans l'espace en anneau et le matériau régénérable à la chaleur est chauffé afin que la paroi circonférentielle extérieure retrouve son plus petit diamètre d'origine, en diminuant la largeur de l'espace en anneau et en exerçant une pression latérale sur la région d'extrémité du tuyau en plastique qui est reçue dans celui-ci.

28. Procédé selon l'une quelconque des revendications 22 à 27, dans lequel la paroi circonférentielle intérieure (142) de l'enceinte tubulaire creuse (140) est poussée dans le tuyau (150).
